# EUROPÄISCHE PATENTSCHRIFT

(11) **EP 1 577 449 B1**
(45) Veröffentlichungstag und Bekanntmachung des Hinweises auf die Patenterteilung: **04.09.2019**
(21) Anmeldenummer: 05101285.4
(22) Anmeldetag: 21.02.2005
(51) Int. Cl.: F16L 5/04, E03C 1/20

(54) **Ablaufanschluss**
Drain connection
Raccordement du dispositif d'écoulement

(30) Priorität: 15.03.2004 DE 202004004125 U
(43) Veröffentlichungstag der Anmeldung: 21.09.2005
(73) Patentinhaber: Viega Technology GmbH & Co. KG, 57439 Attendorn (DE)
(72) Erfinder: Viegener, Walter, 57439, Attendorn (DE)
(74) Vertreter: Cohausz & Florack

(56) Entgegenhaltungen:
- EP-A- 0 321 644
- WO-A-89/11815
- WO-A-99/58199
- DE-U1- 20 016 820
- DE-U1- 29 717 224
- DE-U1- 29 807 728
- US-A- 4 623 170
- US-A- 5 105 592
- US-B1- 6 349 975

## Beschreibung

Die Erfindung betrifft ein Rohrdurchführelement gemäß dem Oberbegriff des Anspruchs 1.

An Stelle einer Kernbohrung kann auch ein vorhandenes, vermörteltes Altrohr benutzt werden, um darin das Rohrdurchführelement einzusetzen.

Das in Rede stehende Rohrdurchführelement ist insbesondere für eine Bade- oder eine Duschwanne geeignet, so dass die Verbindung zum Ablaufrohr horizontal verläuft oder ein klein wenig gegen die Horizontale geneigt ist. Derartige Rohrdurchführelemente werden demzufolge auch als waagerechte Abläufe bezeichnet. Eine Decke wird zunächst frei von Durchbrüchen vergossen und die notwendigen Kernbohrungen werden nachträglich mittels entsprechend ausgelegter Bohrgeräte erstellt. Sie sind demzufolge als maßgenau anzusehen. Das Abflussrohr wird an ein zu einem Abwasserkanal führendes Rohrsystem angeschlossen, welches sich üblicherweise über mehrere Stockwerke eines Gebäudes erstrecken kann. Die Abdichtung des Abflussrohres gegenüber der Innenfläche der Kernbohrung muss gemäß einschlägiger Vorschriften so ausgeführt werden, dass zumindest für eine vorgeschriebene Zeit verhindert wird, dass im Brandfalle durch die Durchbrüche hindurch Feuer und Rauch in die jeweils darüber liegenden Etagen eindringt. Es sind deshalb schon in der Vergangenheit diverse Abschottungen eingesetzt worden, die zumindest eine gewisse Zeit auch den Temperaturen standhalten. Außerdem werden Dichtelemente eingesetzt, die bei der Einwirkung von Wärme aufquellen, so dass Undichtigkeiten abgedichtet werden. Unabhängig vom Einsatz dieser Dichtelemente ist es bislang notwendig, dass der Ringraum zwischen dem Abflussrohr und der Innenfläche des Durchbruches mit Mörtel verfüllt wird. Es ist allgemein bekannt, dass das Rohrdurchführelement durch einen Installateur installiert wird, dass jedoch das Verfüllen mit Mörtel im Normalfall nicht zu seinem Arbeitsgebiet gehört, so dass dafür ein Mauerer oder ein Betonbauer herangezogen werden müsste. Aufgrund dieser Arbeitsweise ist es in der Vergangenheit häufig zu einer zu bemängelnden Ausführung gekommen. Darüber hinaus ist die Arbeitsweise zeit- und demzufolge kostenintensiv.

Aus der US-A-5 105 592 ist eine Feuerbarrierevorrichtung bekannt, die einen. Feuerdurchbruch durch Trennwand- oder Bodenöffnungen, die der Durchleitung eines Kunststoffrohres dienen, verhindern soll. Die Vorrichtung umfasst eine äußere Metallhülse, einen an einem. Ende der Metallhülse angebrachten, sich radial nach außen erstreckenden Flansch, eine innere, rohrförmige, nicht-metallische Kupplung, die zwischen der Metallhülse und dem Kunststoffrohr axial angeordnet ist, radial einwärts von der Metallhülse beabstandet ist und mit der Metallhülse einen Ringraum begrenzt, eine den Ringraum füllende Umwicklung aus durch Wärmeeinwirkung aufquellendem Material, und eine Schicht aus Abdichtungsmaterial, das an einer Stirnseite der durch Wärmeeinwirkung aufquellenden Umwicklung anliegt.. Diese bekannte Vorrichtung ist nicht zum Einsatz in eine Kernbohrung bestimmt, sondern wird vor dem Gießen einer Betondecke bzw. Betonwand auf der Betonschalung platziert.

Die EP-A-0 321 644 offenbart einen feuer- und rauchdichten Verschluss für Durchbrüche in Wänden oder Decken, der durch einen als konischer Stopfen ausgebildeten Formkörper gebildet wird, der aus einem nachgiebigen verformbaren Intumeszenzmaterial besteht. Der Stopfen ist zweckmäßigerweise einstückig ausgebildet und so geformt, dass er in den kreisrunden Wanddurchbruch von Hand geschoben wird, wobei er aufgrund eines geringen Übermaßes und seiner leicht konischen Form sich nach dem Einschieben mit einem vorgegebenen Druck an die Innenwandung des Durchbruchs anlegt. Der Formkörper besteht aus einem Brandschutzschaumstoff, der bei Temperaturen von ca. 300°C und/oder bei Flammeinwirkung unter mehrfacher Volumenvergrößerung karbonisiert.

Die DE 297 17 224 U1 offenbart eine feuerhemmende Rohrabschottung für ein durch einen Wand- oder Deckendurchbruch in Form einer Kernbohrung hindurchgeführtes Rohr. Die Rohrabschottung besteht aus einem Trägermaterial und einem unter Hitzeeinwirkung intumeszierenden Brandschutzmaterial, die sich in die Öffnung, d.h. in den Ringraum zwischen dem Rohr oder einer das Rohr umgebenden Isolierung und der Kernbohrung einpassen lassen. Das Trägermaterial kann dabei ebenso aus einem intumeszierenden Material bestehen. Unabhängig von der Form dient das Trägermaterial nur zur Auflage des intumeszierenden Brandschutzmaterials.

Die US-B1-6 349 975 offenbart eine topfförmige Vorrichtung zur Herstellung einer Rohrdurchleitung durch eine Betondecke. Die Vorrichtung umfasst ein Unterteil, das eine zylindrische Außenwand und eine damit über einen ringförmigen Boden verbundene zylindrische Innenwand aufweist, wobei die Innenwand eine Rohrmuffe (Kupplung) zur Verbindung zweier Rohre trägt. Die Rohrmuffe ist koaxial in der zylindrischen Innenwand gehalten und mit dieser stoffschlüssig verbunden. Des Weiteren umfasst die Vorrichtung ein deckelförmiges Oberteil, das formschlüssig auf die zylindrische Außenwand des Unterteils aufsteckbar ist. Die Vorrichtung wird bei dor Herstellung einer Betondecke mit Frischbeton umgossen. Nach Aushärtung des Betons wird eine obere Platte des deckelförmigen Oberteils weggeschnitten, so dass die Rohrmuffe von oben zugänglich ist.

Die DE29807728U offenbart ein Rohrdurchführelement mit einem Abflussrohr, dessen oberer Bereich als Muffe zum Anschluss eines Rohres ausgebildet ist und das in eine Kernbohrung einer Betondecke einsetzbar ist, und wenigstens einem Dichtelement aus einem durch Wärmeeinwirkung aufquellenden Material, mittels dem das Abflussrohr durch ein Hülsröhr gegenüber der Innenfläche der Kernbohrung abdichtbar ist, wobei das Abflussrohr mit einem ringförmigen Positionierelement aus einem feuerbeständigen Material (Metall) versehen ist. Dieses Dokument wird als nächstliegender Stand der Technik angesehen.

Der vorliegenden Erfindung liegt die Aufgabe zugrunde, ein Rohrdurchführelement der eingangs genannten Art so zu gestalten, dass dessen Einsetzen in eine Kernbohrung einer Betondecke allein von einem Installateur ohne Zuhilfenahme von Werkzeugen möglich ist, und dass auf das Verfüllen des Ringraumes zwischen dem Abflussrohr und der Kernbohrung verzichtet werden kann, wobei jedoch sichergestellt sein muss, dass die einschlägigen Vorschriften voll erfüllt werden.

Diese Aufgabe wird durch ein Rohrdurchführelement mit den Merkmalen des Anspruchs 1 gelöst.

Das Positionierelement ist so ausgelegt, dass es auf das Abflussrohr aufgestülpt und dann diese Einheit in die Kernbohrung eingesetzt wird. Das Positionierelement ist so ausgelegt, dass die Lage des Abflussrohres exakt vorgegeben ist. Da es aus einem feuerbeständigen Material gefertigt ist, findet zumindest eine Abdichtung über eine vorgegebene Zeitdauer statt, d. h. es kann kein Feuer und Rauch von einem Geschoss eines Wohngebäudes oder eines sonstigen Gebäudes in das darüber liegende Stockwerk gelangen. Durch das Abflussrohr hindurch kann normalerweise kein Rauch strömen, da das Abflussrohr im oberen Deckenbereich mit einer Ablaufgarnitur verbunden ist, in der sich Sperrwasser befindet. Durch die exakte Positionierung des Abflussrohres ist es nunmehr auch nicht mehr notwendig, dass der Ringraum mit Mörtels verfüllt wird, so dass dieser zusätzliche Arbeitsgang, wie bereits erläutert, durch einen weiteren Handwerker durchgeführt werden muss. Außerdem ist das Positionierelement so ausgelegt, dass zum Einsetzen dieser Einheit keine Werkzeuge notwendig werden.

Der erfindungsgemäße Gedanke lässt sich konstruktiv besonders einfach umsetzen, da das Positionierelement ringförmig ausgebildet und aus Mineral- wolle oder Steinwolle durch Pressung hergestellt ist. Derartige Materialien lassen sich einfach verformen und sind außerdem feuerbeständig. Darüber hinaus sind diese Materialien kostengünstig herstellbar und einfach zu verarbeiten. Da außerdem die Durchmesser der Abflussrohre genormt sind, ergeben sich nur entsprechende Ausführungen von den Abmessungen her.

In einer bevorzugten Ausführung liegt der Positionierring unterhalb des als Muffe ausgebildeten oberen, dem zu entwässernden Objekt zugewandten Endbereich des Ablaufrohres. Dadurch befindet er sich noch im oberen Bereich der Betondecke, so dass für die fixierende Wirkung vorgegeben ist.

Damit auch der untere Bereich des Abflussrohres fixiert ist, ist vorgesehen, dass dieser Bereich innerhalb eines topfförmigen Formkörpers liegt, der sich an der Außenfläche des Abflussrohres und der Innenfläche der Durchbrechung abstützt. Dieser Formkörper ist so gestaltet, dass Hohlräume gebildet werden, wobei jedoch durch die Kontaktierung der Außenfläche des Abflussrohres und der Innenfläche der Durchbrechung die Wirkung einer Dichtung erzielt wird. Dieser topfförmige Formkörper ermöglicht es, dass er zusammen mit dem Abflussrohr und dem Positionierring in die Kernbohrung eingesetzt wird. Zur Fixierung dieser aus den genannten Bauteilen gebildeten Einheit ist der Formkörper mit mehreren Aufhängelaschen bestückt ist, die aus einem metallischen Material bestehen. Die Länge dieser Aufhängelaschen ist so gewählt, dass sie gegenüber der oberen Fläche der Betondecke vorstehen, so dass sie nach außen abgewinkelt werden können. Dies erfolgt einfach von Hand, ohne dass dazu auch Werkzeuge notwendig werden. Diese Aufhängelaschen könnten beispielsweise aus einem Lochband bestehen. Da bei den unterschiedlichen Gebäuden die Dicken der Decken schwanken, könnten diese Aufhängelaschen noch mit Sollknickstellen versehen werden, um nicht benötigte Überstände abzubrechen. Die Verbindung der Aufhängelaschen mit dem Formkörper erfolgt zweckmäßigerweise mit dem oberen Rand, und dieser Rand liegt in der bevorzugten Ausführung an der Innenfläche der Kernbohrung an.

Zur Erhöhung der Sicherheit gegen das Durchströmen von Feuer und Rauch im Brandfalle ist noch vorgesehen, dass zwischen dem topfförmigen Formkörper und dem Positionierring ein Dichtkörper aus einem unter Wänneeinfluss aufquellenden Material angeordnet ist, der die Außenfläche des Abflussrohres und die Innenfläche der Kernbohrung kontaktiert. Der obere, dem Positionierring zugewandte Bereich des Formkörpers ist lippenartig gestaltet. Bei einer starken Rauchentwicklung könnte es passieren, dass dann noch Rauch zwischen dem Rand und der Innenfläche der Kernbohrung durchströmt. Es ist deshalb noch vorgesehen, dass der Formkörper an seiner Außenseite noch mit einem weiteren Dichtring aus einem unter Wärmeeinwirkung aufquellenden Material versehen ist.

Gemäß einer anderen Ausführungsform des erfindungsgemäßen Rohrdurchführelements ist vorgesehen, dass die Stirnflächen des Positionierringes als Schrägflächen ausgebildet sind sowie parallel zueinander verlaufen. Das Dichtelement ist dabei als Formdichtung ausgebildet und weist wenigstens eine das Abflussrohr umlaufend kontaktierende Dichtlippe auf. Dabei erstreckt sich das obere, den Aufhängelaschen zugeordnete Ende über den Positionierring hinaus. Durch die umlaufende Dichtlippe wird eine äußerst exakte Abdichtung erreicht, dies ist auch darauf zurückzuführen, dass die Formdichtung so ausgelegt ist, dass sie sich verformt.

Anhand der beiliegenden Zeichnung wird die Erfindung noch näher erläutert.

Es zeigt:
- Figur 1: ein in eine Kernbohrung einer Betondecke eingesetztes Rohrdurchführelement; und
- Figur 2: ein Rohrdurchführelement in einer weiteren Ausführung in Schnittdarstellung.

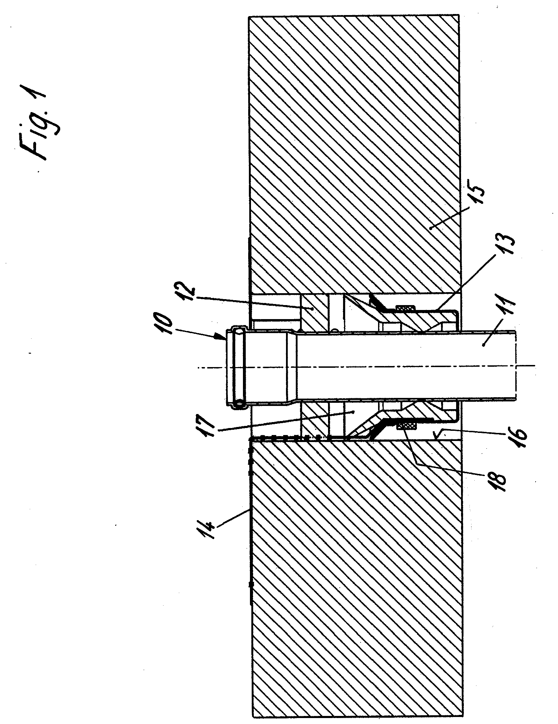

Das in der Figur 1 dargestellte Rohrdurchführelement 10 besteht im wesentlichen aus einem Abflussrohr 11, einem das Abflussrohr 11 in noch näher erläuterter Weise umgebenden Positionierring 12 und einem topfförmigen Formkörper 13 an dem drei Aufhängelaschen 14 angesetzt sind. Dieses Rohrdurchführelement 10 ist in eine mittels eines Werkzeuges hergestellte Kernbohrung einer Betondecke 15 eingesetzt.

Das Abflussrohr 11 wird in nicht näher dargestellter Weise an den waagerechten Ablauf einer Wanne, eines Waschbeckens oder eines ähnlichen sanitären Objektes angeschlossen. Das untere Ende steht leitend mit einem Abflussrohrsystem eines Gebäudes in Verbindung. Der obere, objektseitige Bereich des Abflussrohres 11 ist als Muffe ausgebildet, um ein nicht dargestelltes Rohr darin dichtend anzuschließen. Unterhalb dieses Muffenbereichs liegt der Positionierring 12, der aus Stein-wolle oder Mineralwolle gefertigt ist. Er ist schließend in die Kernbohrung eingesetzt und kontaktiert die Innenfläche 16 der Kernbohrung sowie die Außenfläche des Abflussrohres. Der Formkörper 13 ist so gestaltet, dass der untere Bereich die Außenfläche des Abflussrohres 11 und der obere, in Form einer Lippe gestaltete Bereich die Innenfläche 16 der Kernbohrung kontaktiert. Demzufolge erweitert sich der obere Bereich des topfförmigen Formkörpers 13 konisch. In diesen Innenraum ist ein Dichtelement 17 aus einem unter Wärmeeinwirkung aufquellenden Material eingesetzt. Im mittleren Bereich des topfförmigen Formkörpers 13 ist auf dessen Außenseite ein weiterer Dichtring 18 aus einem ebenfalls unter Wärmeeinwirkung aufquellenden Material aufgestülpt. Die genannten Materialen sind unter dem Namen Multifoam bekannt.

Es ergibt sich aus der Figur 1, dass im Falle eines Brandes unterhalb der Betondecke 15 sämtliche Hohlräume zwischen dem Abflussrohr 11 und der Innenfläche 16 der Kernbohrung durch die aufquellenden Materialien der Dichtelemente 17 und 18 voll ausgefüllt werden, so dass man zumindest davon ausgehen kann, dass während der vorgeschriebenen Zeit kein Rauch durch den Zwischenraum zwischen der Innenfläche 16 der Kernbohrung und dem Abflussrohr 11 hindurchströmen kann.

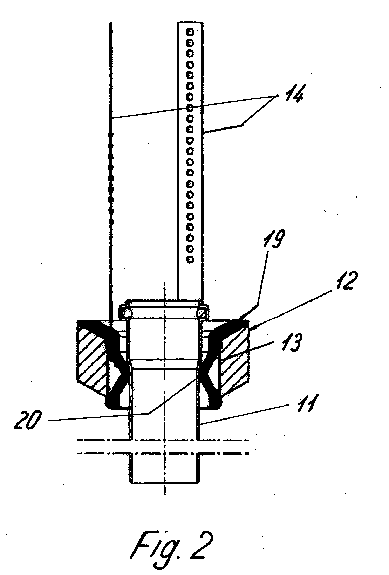

Die Figur 2 zeigt eine Ausführung, bei der der Positionierring 12 schräge Stirnflächen aufweist. Die Abdichtung erfolgt durch eine Formdichtung 19, die durch Wärmeeinwirkung aufquellendes Material enthält. Die Formdichtung 19 ist so gestaltet, dass sie eine umlaufende Dichtlippe 20 aufweist, so dass im eingesetzten Zustand eine Verformung auftritt. Die Formdichtung 19 erstreckt sich über das obere, den Aufhängelaschen 14 zugeordnete Ende des Positionierringes 12.

Die Erfindung ist nicht auf das dargestellte Ausführungsbeispiel beschränkt. Wesentlich ist, dass nicht nur in den Zwischenraum zwischen dem Abflussrohr 11 und der Innenfläche 16 der Kembohrung wenigstens ein Dichtelement aus einem unter Wärmeeinwirkung aufquellenden Material eingesetzt ist, sondern dass zur Fixierung des Abflussrohres 11 der Positionierring 12 in die Kernbohrung eingesetzt wird, so dass auf die Verfüllung mit Mörtel verzichtet werden kann.

## Patentansprüche

1. Rohrdurchführelement (10) für eine Wanne des sanitären Bereiches, mit einem Abflussrohr (11), dessen oberer Bereich als Muffe zum Anschluss eines Rohres ausgebildet ist und das in eine Kernbohrung einer Betondecke (15) einsetzbar ist, und wenigstens einem Dichtelement (17, 18, 19) aus einem durch Wärmeeinwirkung aufquellenden Material, mittels dem das Abflussrohr (11) gegenüber der Innenfläche (16) der Kernbohrung abdichtbar ist, **dadurch gekennzeichnet, dass** das Abflussrohr (11) mit einem ringförmigen Positionierelement (12) aus einem feuerbeständigen Material versehen ist, das im eingesetzten Zustand des Abflussrohres (11) die Innenfläche (16) der Kernbohrung kontaktiert, wobei das ringförmige Positionierelement (12) aus Mineralwolle oder Steinwolle durch Pressung hergestellt ist, und **wobei entweder** unterhalb des Positionierelementes (12) ein topfförmiger Formkörper (13) angebracht ist, der sich an der Außenfläche des Abflussrohres (11) und der Innenfläche (16) der Kernbohrung abstützt, **oder** das Positionierelement (12) das Dichtelement umschließt, welches als Formdichtung (19) ausgebildet ist und eine das Abflussrohr (11) umlaufend kontaktierende Dichtlippe (20) aufweist.

2. Rohrdurchführelement nach Anspruch 1, **dadurch gekennzeichnet, dass** das Positionierelement (12) unterhalb des als Muffe ausgebildeten Endbereiches des Abflussrohres (11) angeordnet ist.

3. Rohrdurchführelement nach Anspruch 1 oder 2, **dadurch gekennzeichnet, dass** der topfförmige Formkörper (13) biegsame Aufhängelaschen (14) aufweist, die aus einem metallischen Material bestehen.

4. Rohrdurchführelement nach Anspruch 3, **dadurch gekennzeichnet, dass** die Aufhängelaschen (14) mit dem oberen Randbereich des Formkörpers (13) verbunden sind.

5. Rohrdurchführelement nach einem Ansprüche 1 bis 4, **dadurch gekennzeichnet, dass** zwischen dem topfförmigen Formkörper (13) und dem Positionierelement (12) das Dichtelement aus einem durch Wärmeeinwirkung aufquellenden Material als Dichtkörper (17) eingesetzt ist, der die Außenfläche des Abflussrohres (11) und die Innenfläche (16) der Kernbohrung kontaktiert.

6. Rohrdurchführelement nach Anspruch 5, **dadurch gekennzeichnet, dass** der topfförmige Formkörper (13) an seiner Außenseite mit einem weiterem Dichtring (18) aus einem unter Wärmeeinwirkung aufquellenden Material versehen ist.

7. Rohrdurchführelement nach Anspruch 1, **dadurch gekennzeichnet, dass** die Stirnflächen des ringförmigen Positionierelementes (12), welches die eine Dichtlippe (20) aufweisende Formdichtung (19) umschließt, als Schrägflächen ausgebildet sind und parallel zueinander verlaufen.

8. Rohrdurchführelement nach Anspruch 1 oder 7, **dadurch gekennzeichnet, dass** sich das obere Ende der Formdichtung (19) über das ringförmige Positionierelementes (12) hinweg erstreckt.

9. Rohrdurchführelement nach Anspruch 8, **dadurch gekennzeichnet, dass** das obere Ende der Formdichtung (19) mit Aufhängelaschen (14) versehen ist.

## Claims

1. Pipe leadthrough element (10) for a tub of the sanitary field, having a discharge pipe (11) whose upper region is constructed as a sleeve for connecting a pipe and which can be inserted into a core hole of a concrete ceiling (15), and at least one sealing element (17, 18, 19) of a material which swells under the effect of heat and by means of which the discharge pipe (11) can be sealed with respect to the inner face (16) of the core hole, **characterised in that** the discharge pipe (11) is provided with an annular positioning element (12) of a fire-resistant material which in the inserted state of the discharge pipe (11) contacts the inner face (16) of the core hole, wherein the annular positioning element (12) is produced from mineral wool or stone wool by means of pressing, and wherein either there is fitted below the positioning element (12) a pot-like shaped member (13) which is supported on the outer face of the discharge pipe (11) and the inner face (16) of the core hole or the positioning element (12) surrounds the sealing element, which is constructed as a moulded seal (19) and which has a sealing lip (20) which contacts the discharge pipe (11) circumferentially.

2. Pipe leadthrough element according to claim 1, **characterised in that** the positioning element (12) is arranged below the end region of the discharge pipe (11) which is constructed as a sleeve.

3. Pipe leadthrough element according to claim 1 or 2, **characterised in that** the pot-like shaped member (13) has bendable suspension lugs (14) which comprise a metal material.

4. Pipe leadthrough element according to claim 3, **characterised in that** the suspension lugs (14) are connected to the upper edge region of the shaped member (13).

5. Pipe leadthrough element according to any one of claims 1 to 4, **characterised in that** between the pot-like shaped member (13) and the positioning element (12) the sealing element of a material which swells under the effect of heat is inserted as a sealing member (17) which contacts the outer face of the discharge pipe (11) and the inner face (16) of the core hole.

6. Pipe leadthrough element according to claim 5, **characterised in that** the pot-like shaped member (13) is provided on the outer side thereof with another sealing ring (18) of a material which swells under the effect of heat.

7. Pipe leadthrough element according to claim 1, **characterised in that** the end faces of the annular positioning element (12) which surrounds the moulded seal (19) which has a sealing lip (20) are constructed as inclined faces and extend parallel with each other.

8. Pipe leadthrough element according to claim 1 or claim 7, **characterised in that** the upper end of the moulded seal (19) extends over the annular positioning element (12).

9. Pipe leadthrough element according to claim 8, **characterised in that** the upper end of the moulded seal (19) is provided with suspension lugs (14).

## Revendications

1. Élément de guidage de tube (10) pour une baignoire du domaine sanitaire, comprenant un tuyau d'évacuation (11) dont la zone supérieure a la forme d'un manchon pour être raccordé à un tube et qui peut être utilisé dans un alésage d'un revêtement en béton (15), et comprenant au moins un élément d'étanchéité (17, 18, 19) en un matériau gonflant sous l'action de chaleur, au moyen duquel le tuyau d'évacuation (11) peut être rendu étanche par rapport à la surface interne (16) de l'alésage, **caractérisé en ce que** le tuyau d'évacuation (11) est muni d'un élément annulaire de positionnement (12) en un matériau résistant au feu, qui, à l'état inséré du tuyau d'évacuation (11), est en contact avec la surface interne (16) de l'alésage, où l'élément annulaire de positionnement (12) est fabriqué par pressage à partir de laine minérale ou de laine de roche, et où soit un corps moulé (13) en forme de pot est disposé sous l'élément de positionnement (12), lequel corps moulé s'appuie sur la surface extérieure du tuyau d'évacuation (11) et la surface interne (16) de l'alésage, soit l'élément de positionnement (12) entoure l'élément d'étanchéité, qui a la forme d'un joint profilé (19) et qui présente une lèvre d'étanchéité en contact avec la périphérie du tuyau d'évacuation (11).

2. Élément de guidage de tube selon la-revendication 1, **caractérisée en ce que** l'élément de positionnement (12) est disposé sous la partie terminale en forme de manchon du tuyau d'évacuation (11).

3. Élément de guidage de tube selon la revendication 1 ou 2, **caractérisé en ce que** le corps moulé (13) en forme de pot présente des languettes d'accrochage (14) flexibles, qui se composent d'un matériau métallique.

4. Élément de guidage de tube selon la revendication 3, **caractérisé en ce que** les languettes d'accrochage (14) sont reliées à la zone de bordure supérieure du corps moulé (13).

5. Élément de guidage de tube selon l'une quelconque des revendications 1 à 4, **caractérisé en ce que** l'élément d'étanchéité en un matériau gonflant sous l'action de chaleur est inséré en tant que corps d'étanchéité entre le corps moulé (13) en forme de pot et l'élément de positionnement (12), l'élément d'étanchéité étant en contact avec la surface externe du tuyau d'évacuation (11) et la surface interne (16) de l'alésage.

6. Élément de guidage de tube selon la revendication 5, **caractérisé en ce que** le corps moulé (13) en forme de tube est muni sur sa face externe, d'un autre anneau d'étanchéité (18) en un matériau gonflant sous l'action de chaleur.

7. Élément de guidage de tube selon la revendication 1, **caractérisé en ce que** les faces avant de l'élément annulaire de positionnement (12), qui entoure le joint profilé (19) présentant une lèvre d'étanchéité (20), ont des surfaces inclinées et s'étendent parallèlement les uns aux autres.

8. Élément de guidage de tube selon la revendication 1 ou 7, **caractérisé en ce que** l'extrémité supérieure du joint profilé (19) s'étend au-delà de l'élément annulaire de positionnement (12).

9. Élément de guidage de tube selon la revendication 8, **caractérisé en ce que** l'extrémité supérieure du joint profilé (19) est muni de languettes d'accrochage (14).
